# EUROPÄISCHE PATENTSCHRIFT

(11) **EP 1 000 224 B1**
(45) Veröffentlichungstag und Bekanntmachung des Hinweises auf die Patenterteilung: **02.10.2002**
(21) Anmeldenummer: 98947313.7
(22) Anmeldetag: 20.07.1998
(51) Int. Cl.: F01D 5/08

(54) **KÜHLLUFTVERTEILUNG IN EINER TURBINENSTUFE EINER GASTURBINE**
DISTRIBUTION OF COOLING AIR IN A TURBINE STAGE OF A GAS TURBINE
REPARTITION DE L'AIR DE REFROIDISSEMENT DANS L'ETAGE DE TURBINE D'UNE TURBINE A GAZ

(30) Priorität: 31.07.1997 DE 19733148
(43) Veröffentlichungstag der Anmeldung: 17.05.2000
(73) Patentinhaber: SIEMENS AKTIENGESELLSCHAFT, 80333 München (DE)
(72) Erfinder: TIEMANN, Peter, D-58452 Witten (DE); MILAZAR, Mirko, D-46049 Oberhausen (DE)
(86) Internationale Anmeldenummer: DE9802030
(87) Internationale Veröffentlichungsnummer: WO99006671

(56) Entgegenhaltungen:
- DE-A- 2 261 443
- DE-A- 2 633 291
- GB-A- 926 160
- US-A- 3 377 803
- US-A- 3 453 825
- SIEMENS AG: "Order No. A96001-U10-A281-V1-7600" THE 3A GAS TURBINE FAMILY FROM SIEMENS, 1. Januar 1997, XP002085616 in der Anmeldung erwähnt

## Beschreibung

Die Erfindung betrifft eine Kühlvorrichtung zur Kühlung einer ersten Stufe einer Gasturbine mit einer ersten Leitschaufel und einer ersten Laufschaufel mittels Luft mit einer ersten Kühlluftzuführung an der zu kühlenden Leitschaufel. Die Kühlluftzuführung weist dabei eine erste Kühlluftversorgung auf, die einen ersten Druck hat.

Zur Erzielung eines hohen Wirkungsgrades bei einer Gasturbine wird zum einen versucht, möglichst hohe Gaseintrittstemperaturen zu erzielen und zum anderen die zur Kühlung notwendige Kühlluft für Leitschaufeln und Laufschaufeln einer Stufe wegen des dadurch verursachten Wirkungsgradverlustes so gering wie möglich zu halten. Leit- und Lauf schaufeln sind jeweils in einem entsprechenden Schaufelkranz angeordnet.

Die Turbinenleitschaufeln werden stufenweise mit Kühlluft versorgt, wobei die Kühlluft von verschiedenen Entnahmen aus dem Verdichter der Gasturbine entstammen. Dies ist bspw. in der Firmenbroschüre "Die 3A-Gasturbinen-Familie von Siemens", Siemens Aktiengesellschaft, Bestell-Nr. A96001-U10-A281, Februar 1995, beschrieben. Zur Kühlung der Stufe und insbesondere der Turbinenleitschaufel wird daher ein bestimmtes Druckgefälle vorausgesetzt, welches den notwendigen Druck der jeweiligen Entnahme bestimmt.

Die DE-OS 2 261 443 zeigt eine Turbinenanordnung für Gasturbinentriebwerke mit einer Abzweigöffnung für Verdichterluft, so dass Kühlluft aus einer Verdichterzwischenstufe durch Durchlässe in eine Kammer der Laufschaufel strömt. Weiterhin weist die Turbinenlaufschaufel einen Sammelraum für Kühlluft auf, aus der die Kühlluft in einen weiteren Hohlraum der Laufschaufel gepumpt wird.

Aufgabe der vorliegenden Erfindung ist es, die Kühlluftmenge für eine Turbinenstufe und insbesondere für einen Leitschaufelkranz gering zu halten, um einen hohen Wirkungsgrad der Gasturbine zu erreichen.

Diese Aufgabe wird mit einer Kühlvorrichtung mit den Merkmalen des Anspruches 1 gelöst. Vorteilhafte Ausgestaltungen und Weiterbildungen sind in den jeweils abhängigen Ansprüchen angegeben.

Die neue Kühlvorrichtung zur Kühlung einer ersten Stufe einer Gasturbine mit einem ersten Leitschaufelkranz und einem ersten Laufschaufelkranz mittels Luft mit einer ersten Kühlluftzuführung an dem zu kühlenden Leitschaufelkranz, wobei die Kühlluftzuführung eine erste Kühlluftversorgung mit einem ersten Druck aufweist, weist erfindungsgemäß eine zweite Kühlluftzuführung zur Kühlung der ersten Stufe stromabwärts von der ersten Kühlluftzuführung auf, wobei die zweite kühlluftzuführung mit einem zweiten Druck versorgt wird, der geringer als der erste Druck ist. Aus dieser Ausgestaltung der Kühlvorrichtung folgt, daß nun eine Stufe unterschiedliche Kühlluftbereiche aufweist. Dadurch gelingt es, daß nur dort ein erhöhtes Druckgefälle der Kühlluft vorliegt, wo es in der Stufe benötigt wird, nämlich insbesondere im Bereich des Kühllufteintritts in die Turbinenleitschaufel. In den anderen Bereichen, in denen die Kühlluft hauptsächlich in der Funktion von Sperrluft eingesetzt wird, wird nun nicht mehr ein hohes Druckgefälle erzeugt. Vielmehr ermöglicht die zweite Kühlluftzuführung mit dem geringeren zweiten Druck eine ausreichende Kühlung mit geringerem Leckageluftmassenstrom. Dies führt zu einer Erhöhung des Wirkungsgrades der Gasturbine gegenüber einer Kühlluftversorgung, bei der die erste Turbinenstufe nach der Brennkammer vom Eintritt Turbinenleitschaufel Nr. 1 bis hintere Verhakung Führungsring vollständig mit Verdichterendluft betrieben wird und die nachfolgende zweite Turbinenstufe vom Eintritt Turbinenleitschaufel Nr. 2 bis vordere Verhakung Turbinenleitschaufel Nr. 3 mit Luft aus der Entnahme Nr. 3 des Verdichters gekühlt wird. Hierbei liegt bei beiden Stufen nämlich jeweils der Kühllufteintritt stromaufwärts der Leitschaufel, d.h. bei dem noch nicht über die Stufe abgebauten, hohen Druck.

Als besonders vorteilhaft hat es sich erwiesen, wenn die zweite Kühlluftzuführung nach einem Drittel, insbesondere nach der Hälfte der axialen Länge, d.h. in Richtung der Rotationsachse der Gasturbine gesehen, des Leitschaufelkranzes an diesem angeordnet ist. Die stromaufwärtigen, besonders stark temperaturbelasteten Bereiche der Leitschaufeln werden über die erste Kühlluftzuführung entsprechend dem aus der ersten Kühlluftversorgung stammenden Massenstrom genügend gekühlt, so daß stromabwärtige Bereiche ohne Funktionsbeeinträchtigung über die zweite Kühlluftzuführung mit niedrigerem Druck ausreichend gekühlt werden. Die zweite Kühlluftzuführung weist dazu vorteilhafterweise eine zweite Kühlluftversorgung auf, die von der ersten Kühlluftversorgung getrennt ist. Beispielsweise sind die erste und die zweite Kühlluftversorgung jeweils unterschiedliche Entnahmestellen aus dem Gasturbinenverdichter.

In einer weiteren bevorzugten Ausgestaltung der Erfindung ist die zweite Kühlluftzuführung über einen Druckminderer mit der ersten Kühlluftversorgung verbunden. Der Druckminderer sorgt dafür, daß der Kühlluftmassenstrom der zweiten Kühlluftzuführung möglichst gering aber wohldosiert ist. Zweckmäßig ist es daher, den Druckminderer regelbar auszuführen. Dieses ermöglicht vor allem auch, daß der zweite Druck gerade noch einen derartigen Wert aufweist, daß die über die zweite Kühlluftversorgung zugeführte Luft noch als Sperrluft wirkt. Durch diese nur äußerst geringe vorliegende Druckdifferenz der Kühlluft gegenüber dem Heißgasdruck im Inneren der Gasturbine fällt daher der eingesetzte Kühlluftmassenstrom sowie der damit verbundene Wirkungsgradverlust ebenfalls gering aus. Als Druckdifferenz sind dabei Werte von 2 bar, insbesondere Werte um 1 bar oder noch weniger einstellbar.

In einer weiteren Ausgestaltung der Erfindung dient die zweite Kühlluftzuführung der ersten Stufe auch als eine erste Kühlluftzuführung für eine der ersten Stufe stromabwärts folgende zweiten Stufe. Bevorzugt wird dabei diese Kühlluftzuführung für die Kühlung eines Leitschaufelkranzes der zweiten Stufe eingesetzt. Einerseits gelingt es dadurch, die Anzahl der notwendigen Entnahmen und damit den Konstruktionsaufwand gering zu halten. Andererseits läßt sich durch Verminderung der Druckdifferenz der notwendige Kühlluftmassenstrom wiederum gering halten.

Eine Ausgestaltung, welche insbesondere für eine Gasturbine mit einer Ringbrennkammer günstig ist, weist eine Leitschaufel mit einer ersten Kammer für die erste Kühlluftversorgung und einer zweiten Kammer für die zweite Kühlluftversorgung auf, die beide benachbart sind und an einen Träger für die Leitschaufel angrenzen. Die erste und die zweite Kammer werden dabei vorteilhafterweise durch eine Wand voneinander getrennt, wobei die Wand in den Leitschaufelträger und die Leitschaufel eingesetzt ist. Dazu sind vorzugsweise im Leitschaufelträger Nuten eingedreht sowie beim Gießen der Leitschaufel an diese ein Wulst mitangegossen. Zwischen den Kammern ist vorzugsweise ein axiales Sperrblech als Wand einsetzbar, welches auch nachträglich einbaubar ist und eine einzige vorhandene Kammer dann in eine erste und eine zweite Kammer unterteilt.

Weitere vorteilhafte Ausgestaltungen, Weiterbildungen und Merkmale der Erfindung werden anhand eines Ausführungsbeispiels in der nachfolgenden Zeichnung naher erläutert. Es zeigen:
- Fig. 1: eine vereinfachte Darstellung einer erfindungsgemäßen Kühlung einer Gasturbine und
- Fig. 2: ein Diagramm mit einem Vergleich des Druckverlaufes mit Darstellung des bisher im Stand der Technik verwendeten Druckgefälles und eines erfindungsgemäßen gestuften Druckgefälles.

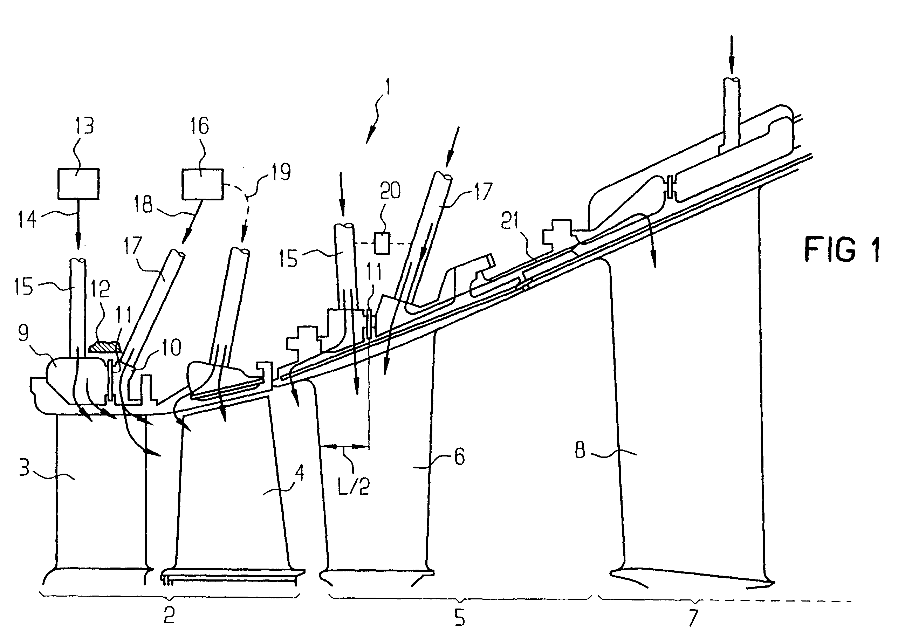

Fig. 1 zeigt eine vereinfachte Darstellung eines Ausschnittes einer Gasturbine 1 in einem Längsschnitt. Dargestellt sind eine erste Stufe 2 mit einem ersten Leitschaufelkranz 3 und einem ersten Laufschaufelkranz 4, eine zweite Stufe 5 mit einem zweiten Leitschaufelkranz 6 sowie einer dritten Stufe 7 mit einem dritten Leitschaufelkranz 8. Bei der zweiten Stufe 5 und der dritten Stufe 7 sind die jeweiligen Laufschaufeln nicht dargestellt. An der ersten Leitschaufel 3 befinden sich eine erste Kammer 9 sowie eine zweite Kammer 10. Zwischen diesen beiden Kammern 9, 10 ist eine Wand 11 angeordnet, die in die Leitschaufel 3 bzw. einen Leitschaufelträger 12 eingesetzt wird. Über eine erste Kühlluftversorgung 13 wird die erste Kammer 9 mit einem ersten Kühlluftmassenstrom 14 versorgt, welcher als Pfeil dargestellt ist. Der erste Kühlluftmassenstrom 14 folgt dabei dem Weg, der ihm durch die erste Kühlluftzuführung 15 vorgegeben ist, bis in die erste Stufe 2 hinein. Die erste Kühlluftzuführung 15 weist in diesem Beispiel auch Strömungskanäle in der ersten Leitschaufel 3 selbst auf. Die zweite Kammer 10 wird aus einer zweiten Kühlluftversorgung 16 mittels der zweiten Kühlluftzuführung 17 mit einem zweiten Kühlluftmassenstrom 18 versorgt. Der erste Kühlluftmassenstrom 14 weist einen höheren Druck auf als der zweite Kühlluftmassenstrom 18. Die erste Kühlluftversorgung 13 wird mit Verdichterendluft betrieben, die zweite Kühlluftversorgung 16 dagegen mit Verdichterluft aus einer Entnahme aus dem nicht dargestellten Verdichter. Auf diese Weise wird die erste Leitschaufel 3 mit zwei unterschiedlichen Drücken beaufschlagt und gekühlt. Die verwendeten Drücke sind dabei so ausgelegt, daß eine Funktion der jeweiligen Kühlluft als Sperrluft jederzeit gewährleistet ist. Die der ersten Leitschaufel 3 nachfolgende Laufschaufel 4 wird ebenfalls gekühlt, wobei der dafür verwendete dritte Kühlluftmassenstrom 19 vorteilhafterweise auch aus der zweiten Kühlluftversorgung 16 stammt.

In Fig. 1 ist weiterhin die zweite Stufe 5 mit der zweiten Leitschaufel 6 dargestellt. Auch hier wird die Leitschaufel 6 jeweils mit unterschiedlichen Kühlluftmassenströmen beaufschlagt, was durch die Pfeile angedeutet ist. Die Kühlluftmassenströme durchqueren dabei ebenfalls jeweils eine Kammer.

Die beiden Kammern sind wiederum durch eine Wand 11 voneinander getrennt. Die Wand 11 ist vorteilhafterweise so angeordnet, daß sie etwa auf der Hälfte der axialen Länge L der Leitschaufel 6 angeordnet ist. Zwischen der ersten Kühlluftzuführung 15 und der zweiten Kühlluftzuführung 17 der zweiten Leitschaufel 6 ist weiterhin ein Druckminderer 20 angeordnet. Über diesen ist es möglich, daß aus der ersten Kühlluftzuführung 15 ein Kühlluftmassenstrom in die zweite Kühlluftzuführung 17 überströmt. Der durch die zweite Kühlluftzuführung 17 strömende Kühlluftmassentrom versorgt daher nicht nur die zweite Leitschaufel 6 sondern dient ebenfalls zur Kühlung der nachfolgenden dritten Leitschaufel 8 der dritten Stufe 7. Der entsprechende vierte Kühlluftmassenstrom 21 zur Kühlung der dritten Leitschaufel 8 ist wiederum als Pfeil angedeutet. Durch diese Aufgliederung der Kühlluftzuführung über die Stufe und insbesondere über die Leitschaufeln läßt sich somit der verwendete Kühlluftmassenstrom verringern, genauso wie das notwendige Druckgefälle absenken. Dieses wird im folgenden näher erläutert.

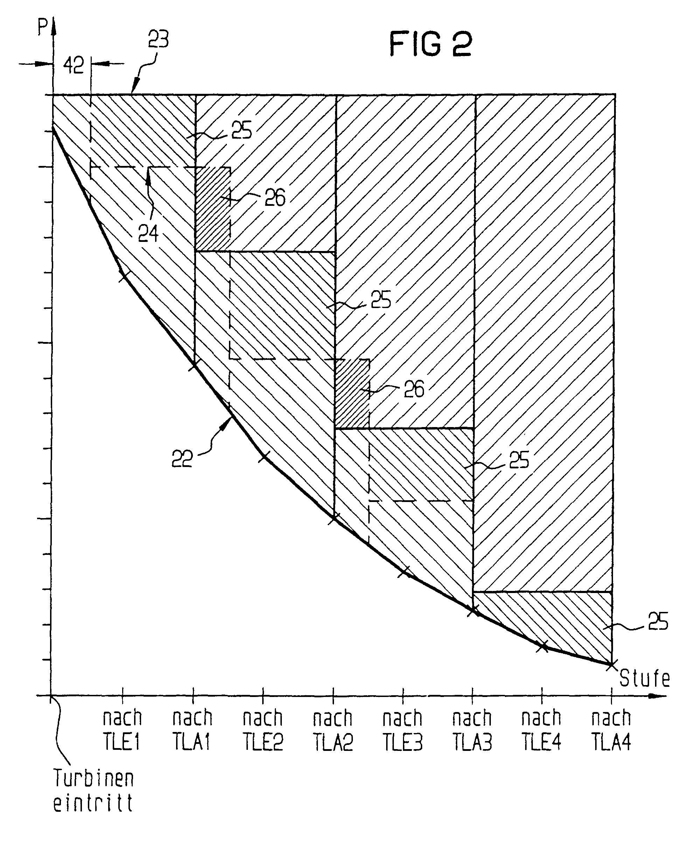

Fig. 2 zeigt in einem Diagramm den Druckverlauf 22 in einer Gasturbine. Auf der Y-Achse ist der Druck aufgetragen, auf der X-Achse der Ort, an dem sich der jeweilige Druck in der Gasturbine befindet. Der Nullpunkt des Diagrammes fällt mit dem Turbineneintritt zusammen. Dann folgt die Turbinenleitschaufel, abgekürzt TLE, anschließend die Turbinenlaufschaufel, abgekürzt TLA, jeweils gekennzeichnet mit der eine Stufe charakterisierenden Ziffer. Die mit dem Bezugszeichen 23 gekennzeichnete Druckhöhe stellt den Verdichterenddruck dar, der gleichzeitig denjenigen Kühlluftmassenstromdruck darstellt, welcher im Turbineneintritt verwendet wird. Das vergleichsweise herangezogene Kühlkonzept sieht eine Verdichterenddruckverwendung bis nach der Laufschaufel 1 (TLA1) vor. Gemäß dem erfindungsgemäßen Konzept wird nach der Hälfte der axialen Länge 2 der Leitschaufel TLE1 ein Kühlluftmassenstrom mit einem anderen, niedrigerem Druck verwendet. Dieses entspricht dem Druckwert entsprechend dem Bezugszeichen 24.

In bezug zur Fig. 1 wird also der erste Kühlluftmassenstrom 14 mit dem Verdichterenddruck 23 als erstem Druck und der zweite Kühlluftmassenstrom 18 mit dem Druckwert 24 als zweitem Druck geliefert. Das von links oben nach rechts unten gestrichelt markierte Karree 25 im Diagramm kennzeichnet diejenige Einsparung, die sich aufgrund des gegenüber dem Stand der Technik geänderten (eingesparten) Druckgefälles ergibt. Das von links unten nach rechts oben gestrichelt markierte Karree 26 stellt das zusätzliche Druckgefälle dar, welches sich aufgrund der geänderten Zuführung von Kühlluft ergibt. Der Gewinn an Druckgefälle ergibt sich daher aus der Differenz der Flächen der von links oben nach rechts unten gestrichelt markierten Karrees 25 zu den Flächen der von links unten nach rechts oben gestrichelt markierten Karrees 26. Der zwischen dem Druckverlauf 22 in der Gasturbine 1 und den jeweiligen Untergrenzen der Karrees 25, 26 verbleibende Druck dient dabei als Sperrdruck. Der Sperrdruck ist der bei der Kühlluftzuführung herrschende Überdruck gegenüber dem in der Gasturbine 1 herrschenden Druck 22. Das dafür sich ergebende Druckgefälle ist gegenüber dem Stand der Technik deutlich geringer. Für die der ersten Stufe 2 nachfolgenden Stufen 5, 7 ergibt sich entsprechendes, was durch weitere Karrees 25, 26 angedeutet ist. Die mit schrägen Strichen gekennzeichnete Fläche oberhalb des Druckverlaufes 22 in der Turbine bezeichnet das gegenüber dem Verdichterenddruck 23 eingesparte Druckgefälle gegenüber dem jeweiligen Druckverlauf 22 in der Gasturbine 1. Entsprechend dem Konzept, nun zwei verschiedene Drücke über der Leitschaufel 3 zu verwenden, ergibt sich außerdem als Vorteil, daß der hintere Teil der Leitschaufel 3 und der entsprechende Führungsring mit kälterer Luft gekühlt wird als der vordere Teil, der mit Luft unter höherem Druck gekühlt wird.

Die vorliegende Erfindung ist in der Lage, die Aufwendungen für die Kühlung der Stufen einer Gasturbine erheblich zu vermindern und trägt damit dazu bei, den Turbinenwirkungsgrad zu erhöhen.

## Patentansprüche

1. Gasturbine (1)
mit einer ersten Stufe (2) mit einer ersten Leitschaufel (3) und einer ersten Laufschaufel (4) und
mit einer Kühlvorrichtung zur Kühlung der ersten Leitschaufel (3) mittels Luft über eine erste Kühlluftzuführung (15) an der zu kühlenden Leitschaufel (3),
wobei die Kühlluftzuführung (15) eine erste Kühlluftversorgung (13) mit einem ersten Druck aufweist, und
wobei eine zweite Kühlluftzuführung (17) zur Kühlung der ersten Leitschaufel (3) stromabwärts von der ersten Kühlluftzuführung (15) angeordnet ist, die mit einem zweiten Druck versorgt wird, der geringer als der erste Druck ist.

2. Gasturbine (1) nach Anspruch 1,
**dadurch gekennzeichnet, daß** die zweite Kühlluftzuführung (17) nach einem Drittel, insbesondere nach der Hälfte einer axialen Länge (L) der Turbinenleitschaufel (3) an dieser angeordnet ist.

3. Gasturbine (1) nach Anspruch 1 oder 2,
**dadurch gekennzeichnet, daß** die zweite Kühlluftzuführung (17) eine zweite Kühlluftversorgung (16) aufweist oder über einen Druckminderer (20) mit der ersten Kühlluftversorgung (13) verbunden ist.

4. Gasturbine (1) nach Anspruch 1, 2 oder 3,
**dadurch gekennzeichnet, daß** der zweite Druck gerade noch einen derartigen Wert aufweist, daß über die zweite Kühlluftversorgung (16) zugeführte Luft noch als Sperrluft dient.

5. Gasturbine (1) nach einem der vorhergehenden Ansprüche,
**dadurch gekennzeichnet, daß** die zweite Kühlluftzuführung (17) der ersten Stufe (5) eine erste Kühlluftzuführung für eine der ersten Stufe (5) stromabwärts folgende zweite Stufe (7) ist.

6. Gasturbine (1) nach Anspruch 5,
**dadurch gekennzeichnet, daß** die zweite Kühlluftzuführung (17) eine erste Kühlluftzuführung für eine Leitschaufel (8) der zweiten Stufe (7) ist.

7. Gasturbine (1) nach einem der vorhergehenden An Sprüche,
**dadurch gekennzeichnet, daß** die Leitschaufel (3, 6, 8) eine erste Kammer (9) für die erste Kühlluftversorgung (13) und eine zweite Kammer (10) für die zweite Kühlluftversorgung (16) aufweist, die beide benachbart sind und an einen Träger (12) für die Leitschaufel (3, 6, 8) angrenzen.

8. Gasturbine (1) nach Anspruch 7,
**dadurch gekennzeichnet, daß** die erste Kammer (9) und die zweite (10) Kammer durch eine Wand (11) voneinander getrennt sind, wobei die Wand (11) in den Träger (12) und in die Leitschaufel (3, 6, 8) eingesetzt ist.

## Claims

1. Gas turbine (1) having a first stage (2) with a first guide blade (3) and a first moving blade (4), and having a cooling device for cooling the first guide blade (3) by means of air via a first cooling-air feed (15) at the guide blade (3) to be cooled, the cooling-air feed (15) having a first cooling-air supply (13) at a first pressure, and a second cooling-air feed (17) for cooling the first guide blade (3) being arranged downstream of the first cooling-air feed (15), the second cooling-air feed (17) being supplied with a second pressure which is lower than the first pressure.

2. Gas turbine (1) according to Claim 1, **characterized in that** the second cooling-air feed (17) is arranged at the turbine guide blade (3) after one-third, in particular after half, of an axial length (L) of the turbine guide blade (3).

3. Gas turbine (1) according to Claim 1 or 2, **characterized in that** the second cooling-air feed (17) has a second cooling-air supply (16) or is connected via a pressure reducer (20) to the first cooling-air supply (13).

4. Gas turbine (1) according to Claim 1, 2 or 3, **characterized in that** the second pressure just still has a value such that air fed via the second cooling-air supply (16) still serves as sealing air.

5. Gas turbine (1) according to one of the preceding claims, **characterized in that** the second cooling-air feed (17) of the first stage (5) is a first cooling-air feed for a second stage (7) following the first stage (5) downstream.

6. Gas turbine (1) according to Claim 5, **characterized in that** the second cooling-air feed (17) is a first cooling-air feed for a guide blade (8) of the second stage (7).

7. Gas turbine (1) according to one of the preceding claims, **characterized in that** the guide blade (3, 6, 8) has a first chamber (9) for the first cooling-air supply (13) and a second chamber (10) for the second cooling-air supply (16), which are adjacent to one another and adjoin a carrier (12) for the guide blade (3, 6, 8).

8. Gas turbine (1) according to Claim 7, **characterized in that** the first chamber (9) and the second chamber (10) are separated from one another by a wall (11), the wall (11) being inserted into the carrier (12) and into the guide blade (3, 6, 8).

## Revendications

1. Turbine (1) à gaz
comprenant un premier étage (2) ayant une première aube (3) directrice et une première aube (4) mobile et
comprenant un dispositif de refroidissement destiné à refroidir la première aube (3) directrice au moyen d'air par l'intermédiaire d'un premier dispositif (15) d'envoi d'air de refroidissement à l'aube (3) directrice à refroidir,
le dispositif (15) d'envoi d'air de refroidissement ayant une première alimentation (13) en air de refroidissement sous une première pression, et
un deuxième dispositif (17) d'envoi d'air de refroidissement destiné à refroidir la première aube (3) directrice étant disposé en aval du premier dispositif (15) d'envoi d'air de refroidissement et étant alimenté sous une deuxième pression qui est plus petite que la première pression.

2. Turbine (1) à gaz suivant la revendication 1,
**caractérisée en ce que** le deuxième dispositif (17) d'envoi d'air de refroidissement est disposé sur la longueur (L) axiale de l'aube (3) directrice de turbine après un tiers et notamment après la moitié de cette longueur.

3. Turbine (1) à gaz suivant la revendication 1 ou 2,
**caractérisée en ce que** le deuxième dispositif (17) d'envoi d'air de refroidissement a une deuxième alimentation (16) en air de refroidissement ou communique avec la première alimentation (13) en air de refroidissement par un dispositif (20) qui abaisse la pression.

4. Turbine (1) à gaz suivant la revendication 1, 2 ou 3,
**caractérisée en ce que** la deuxième pression a justement encore une valeur telle que de l'air apporté par la deuxième alimentation (16) d'air de refroidissement sert encore d'air d'arrêt.

5. Turbine (1) à gaz suivant l'une des revendications précédentes,
**caractérisée en ce que** le deuxième dispositif (17) d'envoi d'air de refroidissement du premier étage (5) est un premier dispositif d'envoi d'air de refroidissement pour un deuxième étage (7) suivant en aval le premier étage (5).

6. Turbine (1) à gaz suivant la revendication 5,
**caractérisée en ce que** le deuxième dispositif (17) d'envoi d'air de refroidissement est un premier dispositif d'envoi d'air de refroidissement pour une aube (8) directrice du deuxième étage (7).

7. Turbine (1) à gaz suivant l'une des revendications précédentes,
**caractérisée en ce que** les aubes (3, 6, 8) directrices ont une première chambre (9) pour la première alimentation (13) en air de refroidissement et une deuxième chambre (10) pour la deuxième alimentation (16) en air de refroidissement qui sont toutes deux voisines et adjacentes sur un support (12) pour l'aube (3, 6, 8) directrice.

8. Turbine (1) à gaz suivant la revendication 7,
**caractérisée en ce que** la première chambre (9) et la deuxième chambre (10) sont séparées l'une de l'autre par une cloison (11), la cloison étant insérée dans le support (12) et dans l'aube (3, 6, 8) directrice.
